# EUROPEAN PATENT APPLICATION

(11) **EP 2 996 076 A1**
(43) Date of publication of application: **16.03.2016**
(21) Application number: 15183448.8
(22) Date of filing: 02.09.2015
(51) Int. Cl.: G06Q 10/06, G06Q 10/10

(54) **METHOD AND APPARATUS FOR INTEGRATED PRODUCT CONFIGURATION AND PRODUCTION PLANNING**

(30) Priority: 10.09.2014 AT 506262014
(71) Applicant: Siemens AG Österreich, 1210 Wien (AT)
(72) Inventor: Dhungana, Deepak, 2201 Seyring (AT); Falkner, Andreas, 1140 Wien (AT)
(74) Representative: Maier, Daniel Oliver

(57) **Abstract**

1. The Invention concerns a method for integrated product configuration and production planning by use of a computer program comprising steps of:
- describing the specific tasks of product and production configuration in an abstract language;
- integrating the solver technologies capable of efficient performing the tasks;
- translating the abstract representation of the tasks to a solver specific representation;
- handling the tasks by the chosen solvers.

The invention allows to define one joint knowledge base for different configurators (sales, engineering, production, etc) and uses the best available technology to perform the different tasks based on the common knowledge base thus improving quality.

The knowledge base is defined only once and has to be maintained only once. The three different representations of the problem are automatically generated as required thus reducing efforts significantly.

## Description

The invention concerns a method for integrated product configuration and production planning and an apparatus for applying the method.

Producers of complex consumer goods (e.g., automobiles) adopt a built-to-order strategy, where each product is tailored to the needs of the users and built considering the options selected by the customer. For example, car buyers often have the possibility to select a set of predefined options for the vehicle they choose to buy. This is an optimal situation for the customer, but at the same time the producers are confronted with a highly complex problem of integrating configuration requirements from the sales, engineering and manufacturing departments. The problem becomes even more complex when considering the different production plants, where the products may be constructed.

Typically, the workflow for processing a customer's order is as follows:
- *Product options and parts definition*: The engineering department defines new parts that can be used for building a product. New product variants are defined based on a mapping of (new) options to these parts.
- *Eliciting customer requirements*: Customers are presented with a set of available options for a certain product type, either manually or using a sales configurator (e.g., web-based configuration tools).
- *Order evaluation*: The options selected by the customers are then checked and complemented to a full set of options required for the product.
- *Product configuration*: Based on the complete set of options, a product configurator is typically used to identify and select the different parts required for building the product. The output of this process is usually a bill of materials (BOM) which can be used for manufacturing the required product.
- *Production planning*: Given a BOM, and a set of production plants, the question to be answered is "which plant has the capability of manufacturing the product"? This is a tricky question, given that not all production plants support all features of the product.
- *Manufacturing*: After the production plant is selected, the product is manufactured and delivered.

Different tasks related to product and production configuration are conducted in isolation. This means different tools in the chain have their own representation of the knowledge required for their part of the task, leading to duplication, inconsistency and inaccuracy of information flow and unverifiable results.

The following problems related to product and production configuration are addressed by the present invention, in an integrated manner (in contrast to existing technologies that treat them as independent activities). The advantage is that key technologies that are good at solving a certain problem are exploited for dealing with sub-problems, thereby reducing redundancy and increasing efficiency.
Problem 1. *Consistency management of the rule base*: When engineers define new options and parts, they need to define consistency rules, as to when these options can be selected. Without proper tool support, the engineers may define rules that are inconsistent to existing rule base. This means, addition of a new constraint/rule to the knowledge base could make the whole knowledge base invalid. The rule base needs to be frequently changed. Therefore, effective tools and technologies are required to manage the complexity of changing the rules, ensuring the consistency of the rules after the change. The engineers require instant feedback on whether a certain change contradicts the available rules. There may be several reasons for inconsistency of the rules, which need to be considered by the inference engine, after every change is made. The changes made to the rule base need to be verified before they are included in the production system.
Problem 2. *Efficient product configuration*: This step consists of order evaluation and product configuration, where customer selected options are checked, expanded to full order strings and the parts required for manufacturing the product are identified. This may include selection of features which are not relevant for the customer but important from the engineering perspective for building the product. Order evaluation comprises order validation (check whether chosen options are compatible) and order expansion (add necessary options to make the order complete).
Problem 3. *Production configuration*: In order to make sure that the knowledge base can evolve easily without invalidating the existing rules and constraints, all options and rules are specified to be valid in a certain range of date, given by intervals of days. In order evaluation for a given date, an option or rule has to be considered inexistent if the effectivity date is less than the start date or greater then the end date. All options referenced in an effective rule must be effective themselves. Dates are not dependent on products, but defined globally. Options may also have different effectivity dates dependent on the factories. A factory may choose to apply different effectivity dates to the options, depending on the local manufacturing conditions. Certain factories may not support certain options at all. Rules, too, may have different effectivity dates for different factories: e.g. availability rules and compatibility (feasibility) rules. This may be used to find an appropriate factory for manufacturing an order unless the factory is given as an input.

Existing technologies treat the three different problems as being independent and provide solutions which require multiple modeling languages, redundant archival and maintenance of the knowledge base, and duplication of efforts. Although several matching technologies already exist, the combination of the technologies to perform specific tasks in the chain is unique to this invention.

There are various technologies and corresponding tools available with generic concepts where those requirements can be mapped to. The effort required for this mapping as well as for other necessary adaptations and extensions such as for knowledge representation possibilities (e.g. rule types) and reasoning capabilities (e.g. improving performance) heavily depends upon the chosen architecture and selected tool. Generally, it will be easier for frameworks with a higher expressivity, such as constraint-based systems.

Independent of the technology, tools are available with a wide range of functionality - from efficient solvers of specialized tasks (such as rule engines, constraint solvers, satisfiability solvers, binary decision diagrams, etc.) to commercial full-scale configurator solutions including editor, graphical user interface, integration support to existing ERP and PLM systems, etc. The expected runtime performance of the solvers (even within the same technology) depends on the difficulty of the configuration problem, e.g. whether there are only rules of special formats (e.g. originating from matrices). Taking advantage from that, some systems (e.g. rule-based) may need explicit adaptations, others - such as SAT solvers include heuristics which can find solutions quickly for many inputs even though they can deal with hard problems as well.

BDD (Binary Decision Diagrams) allow complete and fast reasoning once the diagram was created. This advantage, however, is outweighed by some disadvantages: e.g., diagram creation (pre-compilation) is not guaranteed to use sufficiently few memory and time resources; option domains are practically restricted to Boolean and comparatively small enumerations.

SAT (Satisfiability) solvers have improved significantly during the last years and in some applications even beat the runtime of BDD. However, they are limited to Boolean, too, and can find solutions fast in many cases but not necessarily in all. At present, full configurator environments (with editor, GUI, etc.) are not yet available, rather are they called by other systems (e.g. SAT4J for package configuration in Eclipse IDE). Similar arguments hold for ASP (Answer Set Programming) systems such as Potassco. However, they have a compact knowledge representation (using less memory) and directly support higher expressivity (such as integer expressions, default values, etc.).

Rule engines have a long history and there are various commercial tools available. Preliminary performance tests with random data did not show significantly better behavior than ASP although reasoning power is comparably smaller (directed rules instead of undirected constraints). Many systems follow a procedural approach (no declarative semantics) which makes maintenance more expensive.

Constraint-based systems, too, have a long history with elaborate algorithms (which can perform similarly well as ASP). There are several public-domain and commercial tools available, all of them with a rich expressivity (continuous domains, arithmetic expressions, etc.). Modern tools such as Tacton, S'UPREME, etc. use an object-oriented structure to describe the product tree which facilitates modeling (authoring) and change.

The problems described above can be best tackled by integrating different technologies and defining a common input for them. At present however, there exists no such representation for those problems.

According to the invention the problem is described in an abstract language and integrates the technologies capable of efficiently performing the task. During the integration, the abstract representation of the problem is translated automatically to a problem specific representation, which can then be handled by the chosen solver.

The use cases (consistency management, product configuration and production configuration) demand rather different capabilities from the configurator. The reasoning activities can be highly improved by choosing different representations of the problem for different purposes. A forward chaining rule engine would potentially be a better choice for order expansion, whereas a SAT solver or a BDD representation would be a good choice for providing feedback to rule authors. The invention presents the integration of three kinds of solvers to deal with the three partial problems described before:
- Consistency management of the rule base is handled by SAT solver
- Efficient product configuration is handled by a clingo solver
- Production configuration is handled by a choco solver.

The abstract language is powerful enough to specify all requirements, incl. effectivity dates.

The invention allows to define one joint knowledge base for different configurators (sales, engineering, production, etc) and uses the best available technology to perform the different tasks based on the common knowledge base thus improving quality.

The knowledge base is defined only once and has to be maintained only once. The three different representations of the problem are automatically generated as required thus reducing efforts significantly.

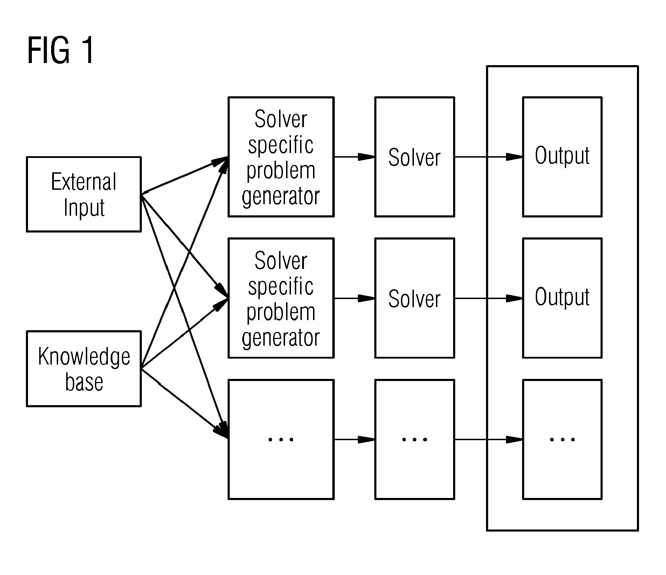

Fig. 1 shows a schematic presentation of the method according to the invention.

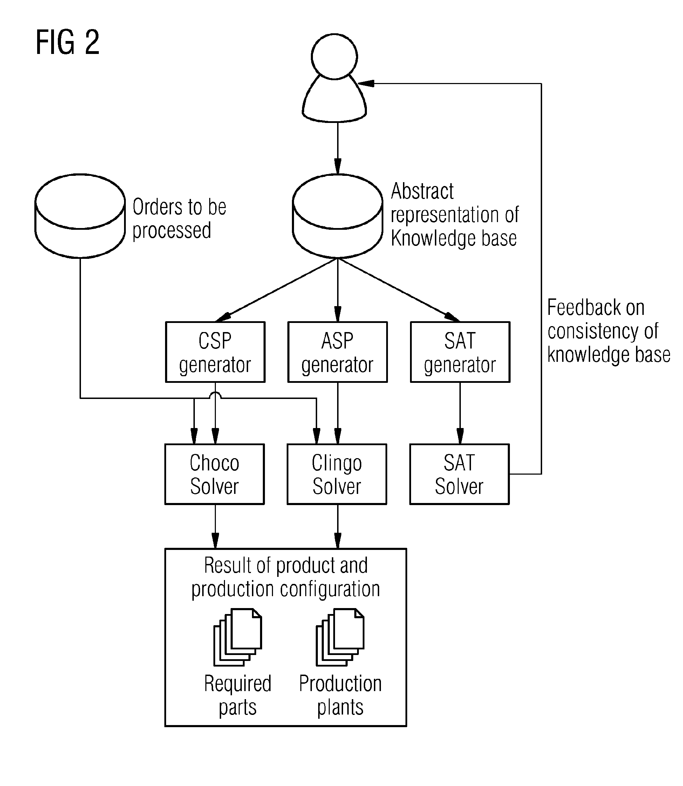

Fig. 2 shows a preferable example of an implementation of the invention.

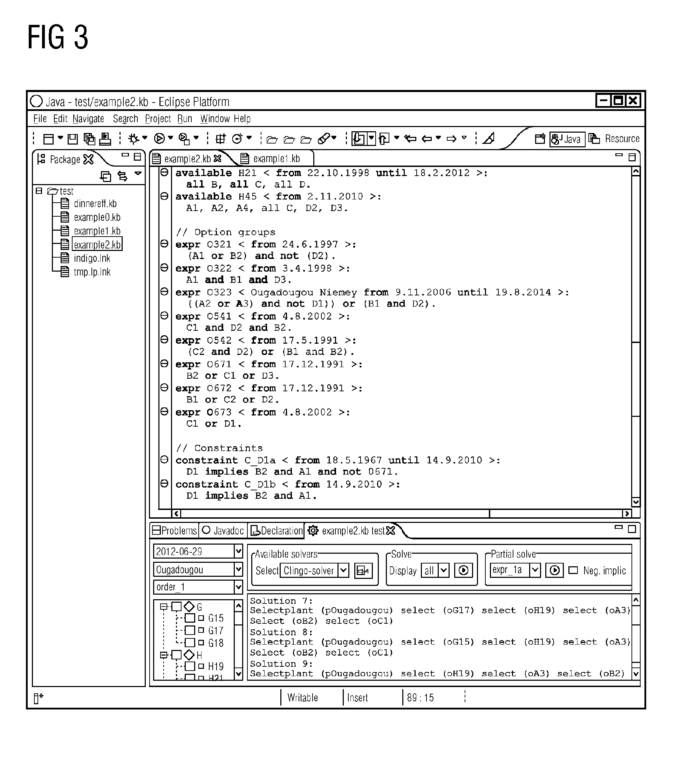

Fig. 3 shows an example of a knowledge base written in this language as well as a prototypic user interface for editing the knowledge base (as Eclipse Plug-In based on Xtext) and running the solvers.

## Claims

1. Method for integrated product configuration and production planning by use of a computer program comprising steps of:
- describing the specific tasks of product and production configuration in an abstract language;
- integrating the solver technologies capable of efficient performing the tasks;
- translating the abstract representation of the tasks to a solver specific representation;
- handling the tasks by the chosen solvers.

2. Method according to claim 1, **characterized in, that** the specific tasks of product and production configuration comprising the
- Consistency management of a rule base
- Efficient product configuration
- Production configuration.

3. Computer for applying the method according to claim 1 comprising means for running a computer program, storage means and a user interface.
